# EUROPEAN PATENT SPECIFICATION

(11) **EP 1 099 363 B1**
(45) Date of publication and mention of the grant of the patent: **28.08.2002**
(21) Application number: 00122679.4
(22) Date of filing: 18.10.2000
(51) Int. Cl.: A01B 3/46

(54) **Improved plowing system**
Verbessertes Pflugsystem
Système de labour perfectionné

(30) Priority: 09.11.1999 IT BG990051
(43) Date of publication of application: 16.05.2001
(73) Proprietor: Moro Aratri S.R.L., 24056 Fontanella (BG) (IT)
(72) Inventor: Moro, Andrea, 24056 Fontanella (BG) (IT)
(74) Representative: Garavelli, Paolo

(56) References cited:
- DE-C- 824 273
- FR-A- 2 298 923
- FR-A- 2 774 852

## Description

The present invention refers to an improved system for plowing and agricultural machines circulation, and in particular to a system equipped with a trolley unit and a drawbar unit that realise a wheel-based bearing device with the double function of circulation and work for plows.

Different types of wheel-based support systems are known in the art and they are used on driven plows that must be handled and transported to the workplace. Such supports can be divided into four main categories.

The first category comprises the support with a single working wheel. This support is stably placed on one side of the plow or in its end part, and performs the function of bearing and adjusting the plow depth when plowing. It does not perform any function when transporting the plow and, in case of reversible plows, the wheel is generally also reversible in order to allow its use on both working sides of the plow. The plow is connected to the tractor through a traditional three-point connection device.

The second category comprises the support with two working wheels. Such support is used on reversible plows, and is stably placed on one side of the plow or in its end part. The two wheels, being respectively alternated for each plow side, perform the function of bearing and adjusting the working depth when plowing, but do not perform any function when transporting the plow. Also in this case the plow is connected to the tractor by means of a traditional three-point connection device.

The third category comprises the support with a single working and transporting wheel. Such support is stably placed on a side of the plow or in its end part, and performs the function of bearing the plow when plowing, and the function of bearing it when transporting the plow. The wheel is pivoting in such a way as to assume the adequate direction under all normal circulation situations (turns, reverse motions, etc.). Also in this case the plow is connected to the tractor through a traditional three-point connection device, or, during the transport, through a two-lower-point connection device.

The fourth category comprises the trolley support with two transport wheels. Such support is composed of a trolley that is used only when transporting the plow, and often is accompanied by a further single or double wheel for bearing the plow when plowing. The trolley is not a fixed part of the plow, but is coupled to the plow only for circulation on roads. Also in this case the plow is connected to the tractor through a traditional three-point connection device, or a two-lower-point connection device.

These systems however are not satisfactory, since they have, in addition to those already mentioned previously, the following problems:
- none of them can be used to simultaneously perform the two transporting and working functions, apart from the system in the third category, that is however equipped with a single wheel and therefore has stability problems during the transport and very high overall dimensions transversally to the running direction during the turns ("flagging" effect);
- the trolley with two wheels has a big bending radius and it is always necessary to uncouple and re-couple the trolley at the beginning and at the end of the work, with obvious problems as regards times and costs.

FR-A-2 774 852 discloses a plowing unit with a support frame and a rotating trolley unit, as in the preamble of Claim 1.

DE-C-824 273 discloses a plowing system with a rotating trolley unit.

FR-A-2 298 923 discloses a prior art plowing system.

Object of the present invention is solving the above prior-art problems by providing an improved plowing system that allows performing a double function, that is circulating/transporting the plowing unit and working the unit itself without requiring long and complicated coupling and uncoupling operations.

A further object of the present invention is providing a plowing system that allows a correct and safe running during the transport, being supported by at least a pair of wheels that improve its resting on the ground.

The support as a trolley with two casters is generally a stable part of the plow and is used both for road circulation, and for working phases. The plow, during working phases, is connected to the tractor by means of a common three-point connection device, either of the fixed or of the steerable type, while during the transporting phase it can be connected to the tractor by means of a common steering connection device with three points, two lower points, or by means of a drawbar.

With respect to the single-wheel system, the system of the invention allows joining the plow to the transporting tractor through a non-rigid joint that avoids the characteristic "flagging" of the tool when turning. Moreover, the resting on two wheels is more stable and enables supporting higher loads. With respect to the trolley with two wheels coupled to the plow, the system of the invention allows a lower bending radius and avoids the coupling and uncoupling manoeuvre of the trolley at the beginning and at the end of the work.

The above and other objects and advantages of the invention, as will appear from the following description, are obtained by a plowing system as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:

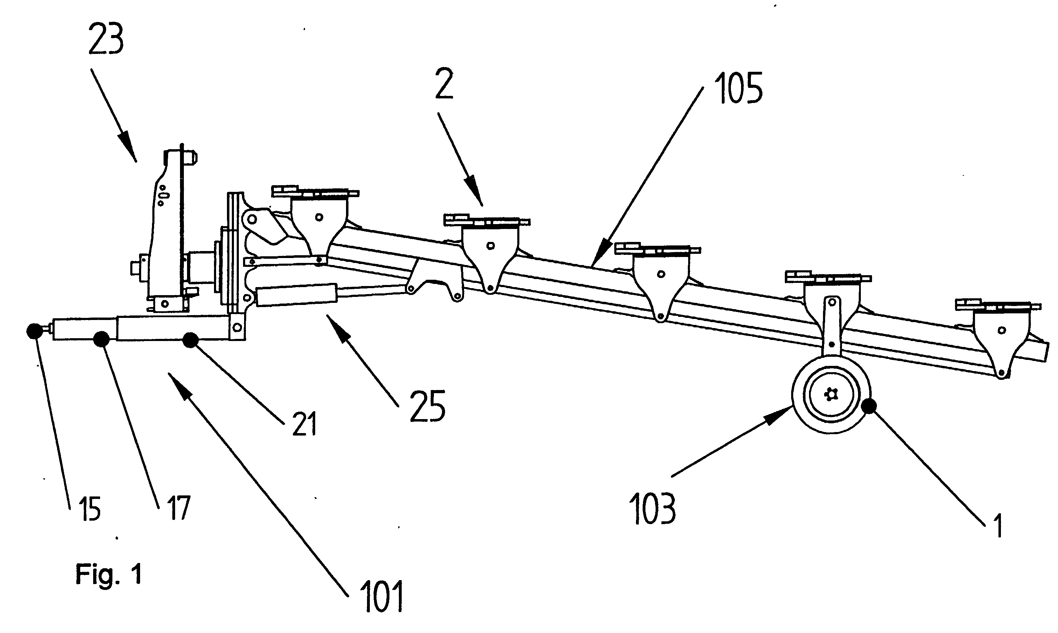

- Figure 1 is a side view of an embodiment of the plowing system according to the present invention in a transport position;

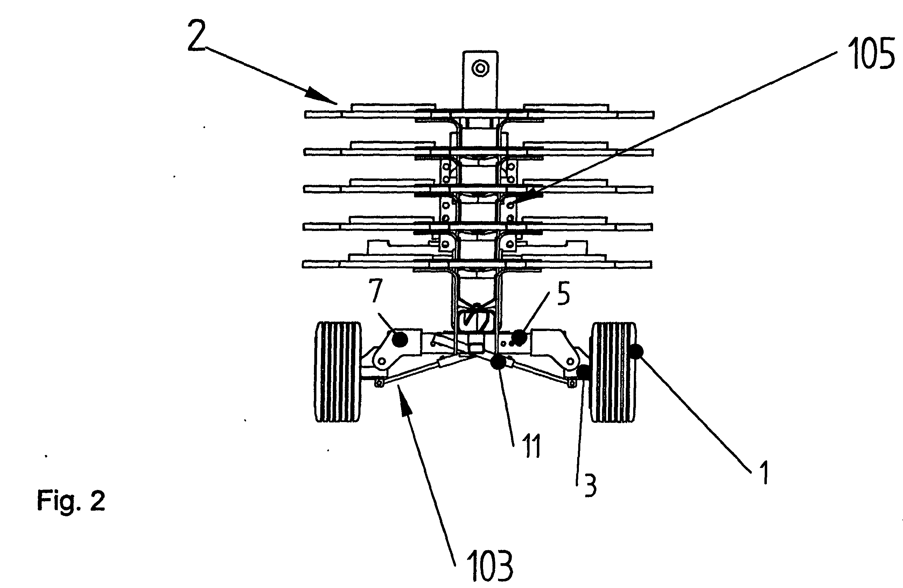

- Figure 2 is a rear view of the system in Fig. 1 in the transport position;

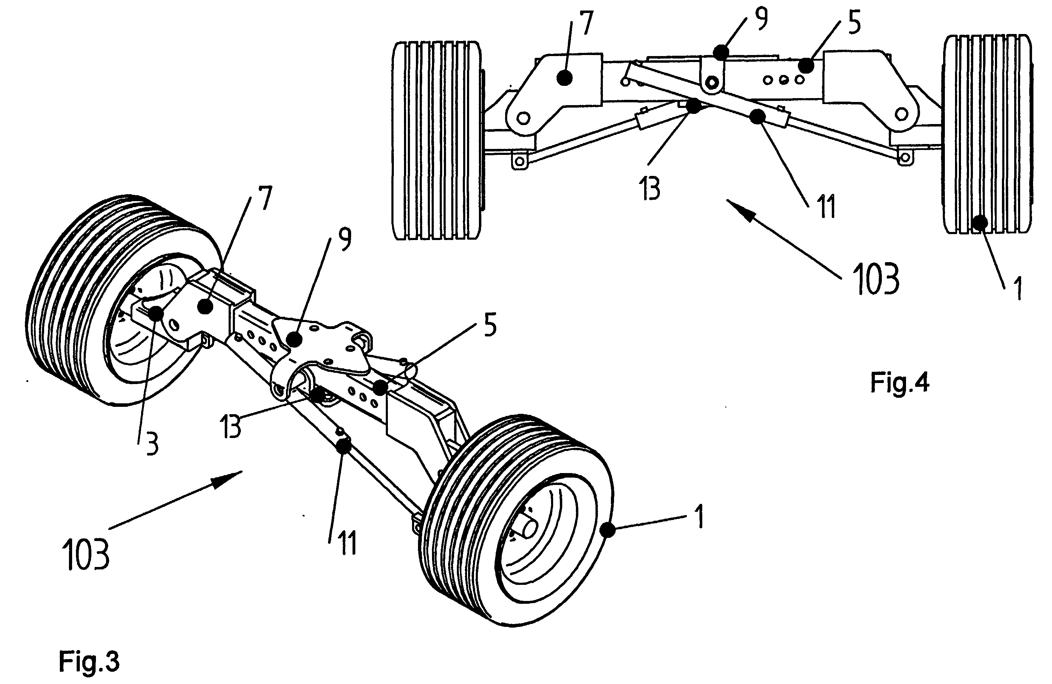

- Figure 3 is a perspective view of the trolley unit of the system of the present invention;

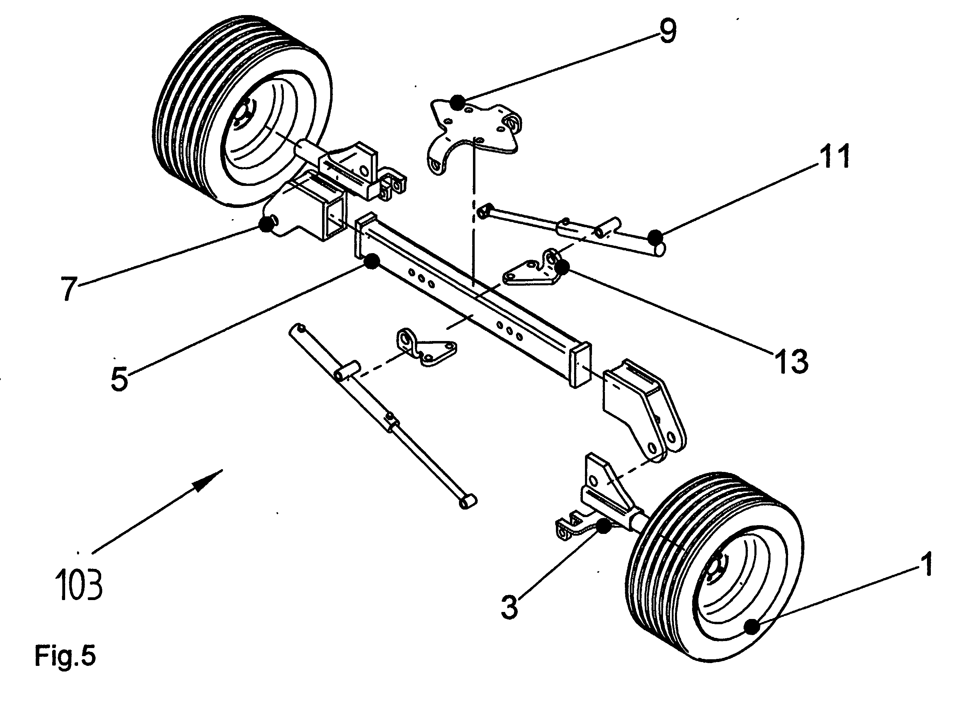

- Figure 4 is a rear view of the trolley unit in Fig. 3;
- Figure 5 is an exploded perspective view of the trolley unit in Fig. 3;
- Figure 6 is an enlarged perspective view of the part of the drawbar unit of the system of the present invention;
- Figure 7 is a perspective view of the system of the present invention from which the enlarged view in Fig. 6 has been taken;
- Figure 8 is an exploded perspective view of the drawbar unit of the system of the present invention;

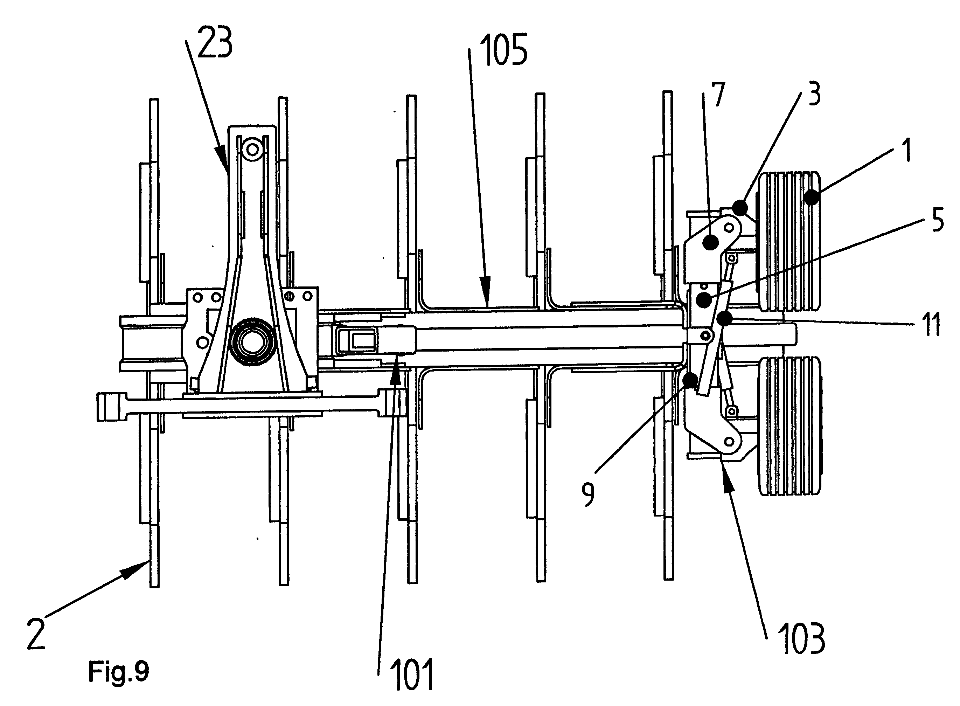

- Figure 9 is a front view of the system of the present invention in the working position of the plow;
- Figure 10 is a side view of the system of the present invention, always rotated in its working position;

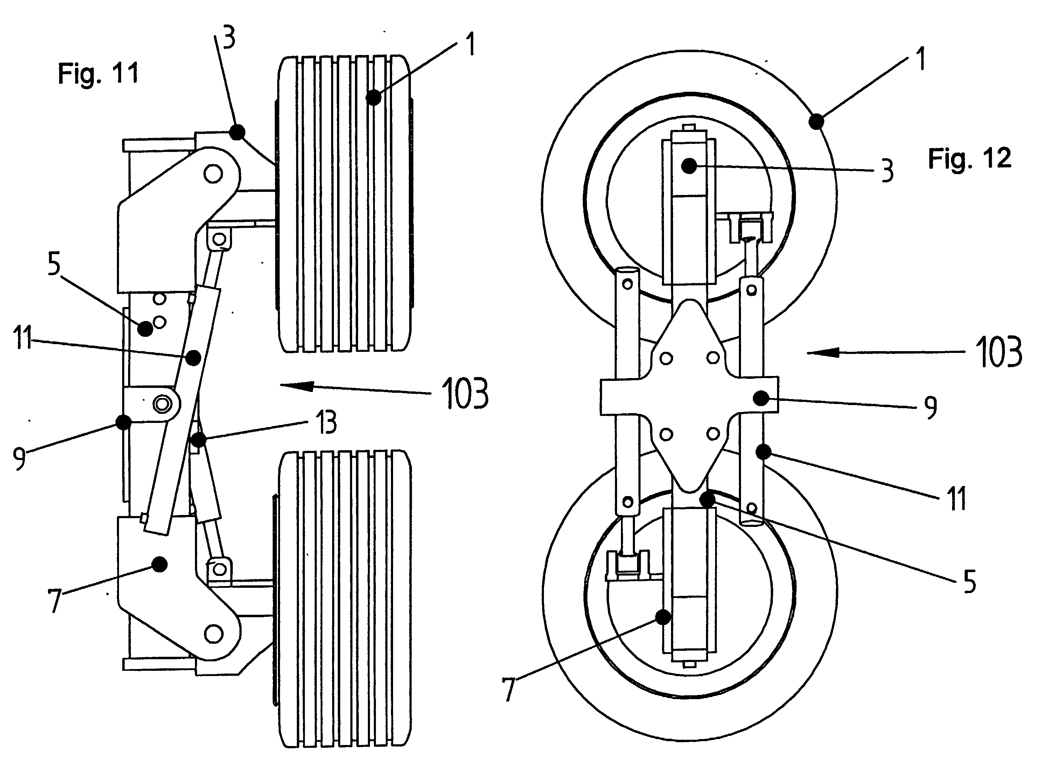

- Figure 11 is a front view of the trolley unit in the working position of the plow; and
- Figure 12 is a side view of the trolley unit in Fig. 11.

With reference to the Figures, a preferred embodiment of the improved plowing system of the present invention is shown.

Such system substantially comprises a support frame 105 equipped with a plurality of securing units 2 for the plowing bodies: in the embodiment shown, the units 2 are five and are placed along the length of the frame 105, as can be better seen in Fig.s 1, 2, 9 and 10. The units 2, being known in the art and not being part of the present invention, will not be further described in detail. The support frame 105, through a rotating connection to the unit coupling head 23, is adapted to be connected to transporting and working means, such as for example a common agricultural tractor (not shown). The unit coupling head 23, also being known in the art and not being part of the present invention, will not be further described in detail.

The plowing system of the present invention further comprises at least one trolley unit 103 connected to the support frame 105 at a first end thereof, to allow the transport to the workplace in a novel way.

Moreover, the system of the invention comprises at least one drawbar unit 101 connected to the front end of the support frame 105: object of the drawbar unit, that is again in a novel way of the type that is able to be extended and oriented, is mainly that of enabling the two system operating positions, that is transport to the workplace and plowing work real and proper. The chance of extending the drawbar at will allows an easy passage from the working position to the transporting position and vice versa, avoiding to rest the plow on the ground. It is further possible to select the most useful distance of the plow from the tractor during the transport.

In order to realise such double functionality, the trolley unit 103 with which the plowing system of the invention is equipped, is substantially composed, as can be better seen in Fig. 5, of:
- a carrier axle 5;
- at least two wheels 1, each one which is connected to the carrier axle 5 through a respective hub 3 hinged to a respective slider 7; the two sliders 7 connected to the wheels 1 are adapted to slide along the carrier axle 5, thereby realising a translation and rotation system;
- at least two handling means 11, of the oleodynamic jack type, each adapted to displace a respective one of the wheels 1 into their transporting and working positions; and
- a bracket 9 for the operating connection of the handling means 11 to the carrier axle 5 through suitable counter-brackets 13.

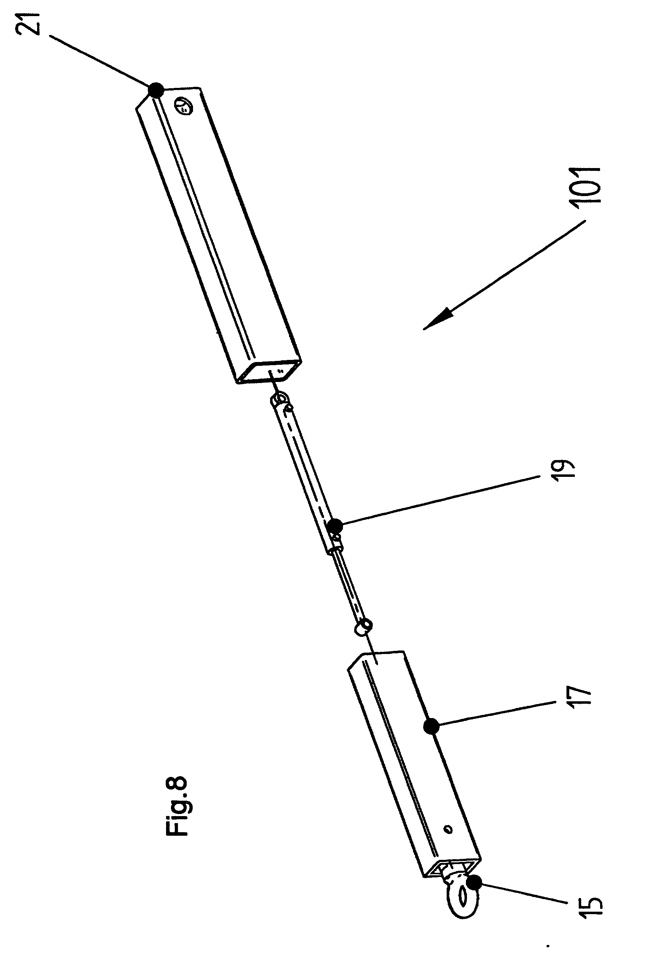

Moreover, in order to realise the two above-mentioned functionalities, the drawbar unit 101, with which the plowing system according to the invention is equipped, substantially comprises, as can be better seen in Fig. 8:
- an external body 21 shaped as an elongated pipe with a rectangular section and hingedly connected to the frame 105;
- an internal body 17 housed inside the external body 21 and adapted to go out of the external body 21 with a telescopic movement corresponding to the transporting, working and coupling/uncoupling positions of the plow to the tractor; such going-out movement is realised through control means 19, also here commonly of the oleodynamic jack type; and
- a ring (or "lunette") 15 for coupling with the agricultural tractor or the like, where such ring 15 is placed at the end of the internal body 17 that is opposite to the frame 105.

In order to complete the realisation of the system of the invention, as can be seen in Fig.s 1 and 9, a common head 23 for coupling with the agricultural tractor and a common jack 25 for modifying the working width (in the example with a variable plow) are provided.

All hydraulic jacks 11, 19, 25, etc. are connected to suitable connectors (not shown) that are available on the tractor, and then exploit the oleodynamic plant and its related controls. Should the number of connectors not be enough, for the operation of the system of the invention, it will be necessary to apply mechanically or electrically controlled flow switches.

The operation of the plowing system according to the present invention will now be described, by dividing it into two: trolley unit 103 and drawbar unit 101.

As regards the trolley unit 103, its major particularity is the capability of modifying position and orientation of the wheels 1 through the simple above-described translation and rotation device. The suitably located wheels 1 assume both the correct transport position (Fig.s 3 and 4) where the plow position is horizontal, and the correct working position (Fig.s 11 and 12) where the plow position is vertical. The passage from the working position to the transport position, as already stated, is performed by operating two oleodynamic jacks 11.

After having placed the plow horizontally (Fig.s 1 and 2), the oleodynamic jacks 11 are operated for opening; by sliding the slider 7 along the carrier axle 5, the wheels 1 move away one from the other. This allows having a sufficiently wide gauge as to allow stability when circulating. The jacks 11 will end their stroke by rotating the wheel hub 3 by 90°, thereby orienting the wheels 1 perpendicularly to the ground.

The backward movement will obviously allow performing the reverse passage, that is from the correct transport position to the working position.

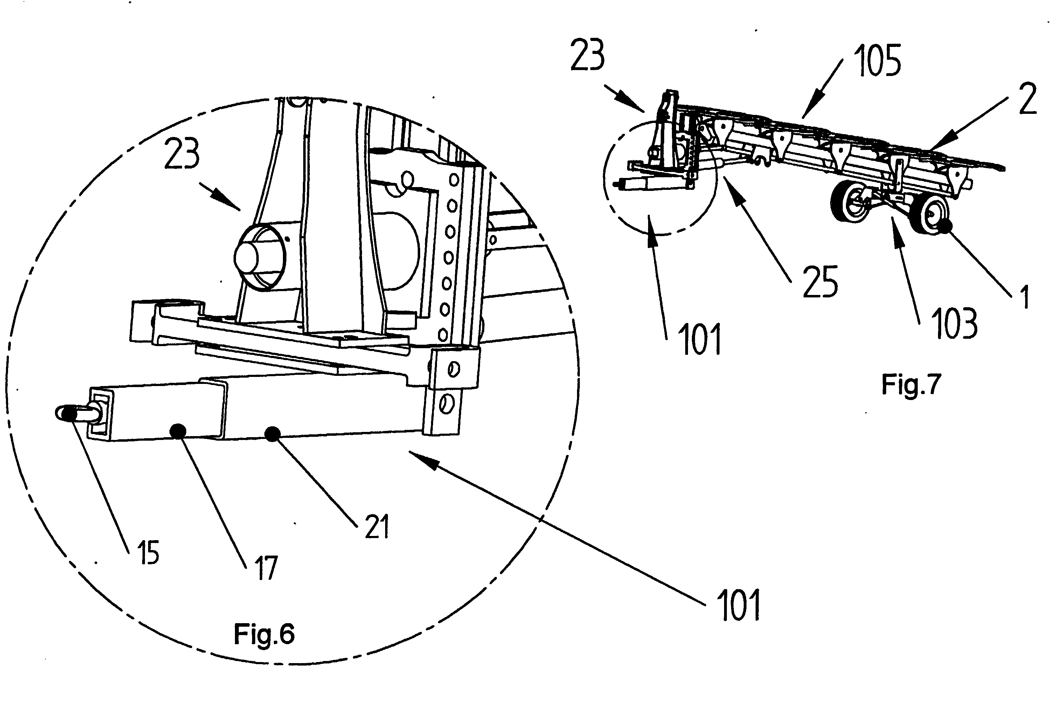

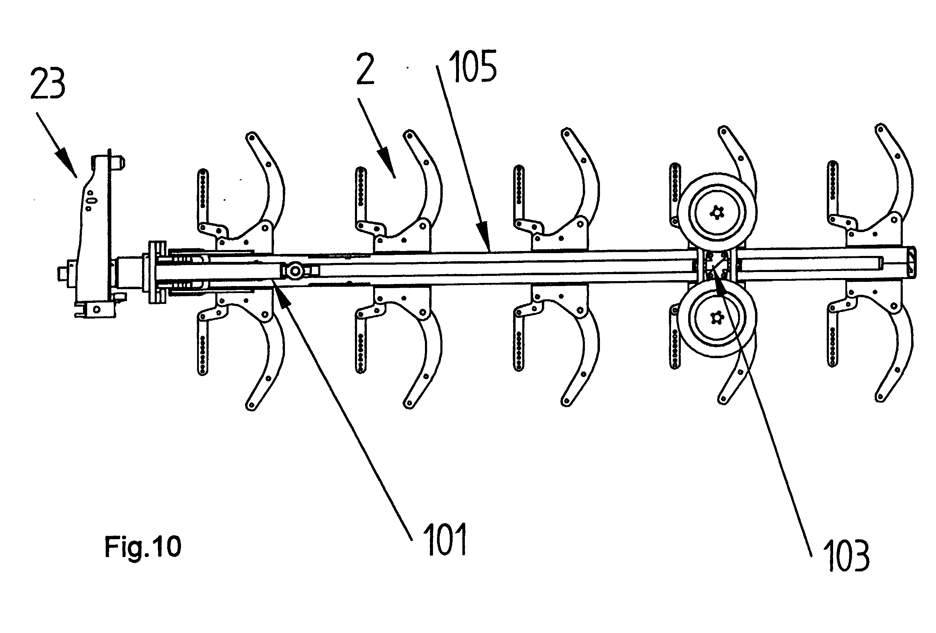

As regards the drawbar unit 101, instead, it is used only for connecting the tractor to the plow during the transport phase (Fig. 7), while during normal working operations in the fields, it is bent back in a rest position along the frame (Fig. 10) and the plow is coupled to the tractor through the traditional three-point connection device of the unit coupling head 23 (Fig. 10).

The passage of the drawbar unit 101 from the working position to the transport position essentially implies three movements.

In the first one, after having placed the plow horizontally and the trolley unit 103 in the transport position, the drawbar unit 101 is rotated by 180°, as can be seen in Fig. 6, from the rest position to the tow position, with the ring 15 frontally projecting from the plow. The above rotation is manually performed, but the use of an hydraulic jack (not shown) is provided to facilitate such operation should the need therefor occur.

The second movement consists in elongating the telescopic drawbar unit 101 (Fig. 8) till the alignment between plow ring 15 and tractor towing ring is reached. Such elongation is performed by operating the oleodynamic jack 19. It is now possible to couple the drawbar 101 to the tractor and to completely uncouple the three-point connection system.

As regards the third movement, by always elongating the telescopic drawbar unit 101 by means of the jack 19, the plow is moved away from the tractor, in order to allow a wide steering angle.

## Claims

1. Plowing system comprising:
- a support frame (105) equipped with securing units (2) for plowing bodies, said support frame (105) being adapted to be connected to transporting and working means; and
- at least one trolley unit (103) connected to said support frame (105) at a first end thereof, said at least one trolley unit (103) being adapted to assume a first operating position, with both its wheels (1) in contact with the ground, for circulating and transporting a plow, and a second working position, with its wheels (1) that alternatively are in contact with the ground, when the plow works into the ground;
**characterised in that** it further comprises at least one drawbar unit (101) connected to said support frame (105) at a second end thereof, said drawbar unit (101) being able to allow the plowing system to steer with respect to its transporting and working means during its circulating and transporting phase, while the trolley unit (103) remains fixed and does not steer with respect to the support frame (105).

2. Plowing system according to Claim 1,
**characterised in that** said at least one trolley unit (103) substantially comprises:
- a carrier axle (5);
- at least two wheels (1), each one of said wheels (1) being connected to said carrier axle (5) through a respective hub (3) hinged to a respective slider (7), said at least two sliders (7) connected to said at least two wheels (1) being adapted to slide along said carrier axle (5);
- at least two handling means (11), each one adapted to displace a respective one of said wheels (1) into their transporting and working positions; and
- a bracket (9) for the operating connection of said handling means (11) to said carrier axle (5).

3. Plowing system according to Claim 2, **characterised in that** said handling means (11) are hydraulic means, in particular composed of at least one pair of oleodynamic jacks (11).

4. Plowing system according to any one of the previous Claims, **characterised in that** said support frame (105) is connected to said transporting and working means through a coupling head (23).

5. Plowing system according to any one of the previous Claims, **characterised in that** said at least one trolley unit (103) is connected to one of the securing units (2) for the plowing bodies.

6. Plowing system according to any one of the previous Claims, **characterised in that** said drawbar unit (101) substantially comprises:
- an external body (21);
- an internal body (17) housed inside said external body (21) and adapted to go out of said external body (21) with a telescopic movement corresponding to the transporting, coupling/uncoupling and working positions of the plow, such going-out movement being realised through control means (19); and
- a coupling ring (15) placed at the operating end of said internal body (17).

7. Plowing system according to Claim 6, **characterised in that** said control means (19) are hydraulic means, in particular composed of at least one oleodynamic jack.

8. Plowing system according to any one of the previous Claims, **characterised in that** it is further equipped with hydraulic means to perform a rotation of said drawbar unit (101) to the transporting and working positions.

9. Plowing system according to any one of the previous Claims, **characterised in that** it is further equipped with mechanically or electrically controlled flow switches for controlling said handling means (11) and said control means (19) in addition to other hydraulic means with which said system is equipped.

## Patentansprüche

1. Pflugsystem einschliesslich:
- einem Stützrahmen (105) mit Befestigungsgruppen (2) des Pflugkörpers, wobei der Stützrahmen (105) mit einem Transport- und Arbeitsmittel verbunden wird; und
- wenigstens einer Fahrgestellgruppe (103), die an einem Endteil des genannten Stützrahmens befestigt wird (105), wobei wenigstens eine Fahrgestellgruppe (103) eine erste operative Stellung, mit beiden Rädern (1) auf dem Boden, für die Fahrt und den Transport des Pfluges einnimmt, und einer zweiten Arbeitsstellung, in der abwechselnd die Räder (1) mit dem Boden in Berührung sind, wenn der Pflug die Erde bearbeitet;
mit dem Merkmal, dass weiterhin wenigstens eine Lenkgruppe (101) am zweiten Endteil des genannten Stützrahmens (105) befestigt ist, wobei diese Lenkgruppe (101) in der Lage ist, dem Pflugsystem die Lenkung entsprechend dem eigenen Transport- und Arbeitsmittel während der Fahrt und Transportes zu ermöglichen, während die Fahrgestellgruppe (103) sich nicht bewegt und nicht mit dem Fahrgestell (105) gesteuert wird.

2. Pflugsystem gemäss Patenantspruch 1 mit dem Merkmal, dass wenigstens eine Fahrgestellgruppe (103) hauptsächlich folgendes umfasst:
- eine Achswelle (5);
- wenigstens zwei Räder (1), die jeweils mit der obigen Achswelle (5) über eine auf je einen Schlitten (7) einklappbare (3) Nabe verbunden sind, wobei zumindest die beiden Schlitten (7) mit wenigstens zwei Rädern (1) verbunden sind und längs der Achswelle (5) laufen;
- wenigstens zwei Bewegungselemente (11) für die Verlagerung je eines Rades (1) auf Transport- und Arbeitsposition; und
- einem Bügel (9) für die operative Verbindung der obigen Bewegungsmittel (11) der Achswelle (5).

3. Pflugsystem nach Patentanspruch 2 mit dem Merkmal, dass die Bewegungselemente (11) hydraulisch arbeiten, und im einzelnen aus wenigstens einem Paar öldynamischer Winden (11) bestehen.

4. Pflugsystem gemäß einem der vorherigen Patentansprüche mit dem Merkmal, dass der Stützrahmen (105) durch einen Verkopplungskopf (23) mit den genannten Transport- und Arbeitsmitteln verbunden ist.

5. Pflugsystem gemäß einem der vorherigen Patentansprüche mit dem Merkmal, dass wenigstens eine Fahrgestellgruppe (103) mit einer der Befestigungsgruppen (2) des Pflugkörpers verbunden ist.

6. Pflugsystem gemäß einem der vorherigen Patentansprüche mit dem Merkmal, dass die genannte Lenkgruppe (101) hauptsächlich folgendes umfasst:
- einen Aussenkörper (21)
- einen Innenkörper (17) im Inneren des Aussenkörpers (21), der in Teleskopart in die Transport-, Arbeitspositionen und für An/Abkoppeln des Pfluges an den Traktor ausgefahren wird. Der Ausfahrvorgang erfolgt durch Steuergeräte (19); und
- einem Ring (15) am operativen Endteil des genannten Innenkörpers (17).

7. Pflugsystem gemäß Patentanspruch 6 mit dem Merkmal, dass die Steuerung (19) hydraulisch erfolgt und im einzelnen aus wenigstens einer öldynamischen Winde besteht.

8. Pflugsystem gemäß einem der vorherigen Patentansprüche mit dem Merkmal, dass es mit hydraulischen Vorrichtungen für die Drehung der genannten Lenkgruppe (101) auf Transport- und Arbeitsposition versehen ist.

9. Pflugsystem gemäß einem der vorherigen Patentansprüche mit dem Merkmal, dass es mit Flussabweisern für die mechanische oder elektrische Steuerung der genannten Bewegungselemente (11) und Steuervorrichtungen (19), sowie den anderen hydraulischen Vorrichtungen des genannten Systems versehen ist.

## Revendications

1. Système pour le labourage comprenant:
- un bâti de support (105) équipé de groupes (2) de fixation pour les pièces de labourage, dénommé bâti de support (105) et pouvant être attelé à des moyens de transport et de travail; et
- au moins un groupe de chariot (103) raccordé à une première extrémité audit bâti de support (105), dénommé au moins un groupe de chariot (103) capable d'assumer une première position de travail, avec ses deux roues (1) en contact avec le terrain pour la circulation et le transport de la charrue, et une seconde position de travail, avec ses roues (1) entrant alternativement en contact avec le sol lorsque la charrue travaille dans le terrain;
**caractérisé en ce qu'**il comprend aussi un groupe timon (101) raccordé à une deuxième extrémité audit bâti de support (105), appelé groupe timon (101) et capable de permettre au système pour labourage de braquer vis-à-vis de ses propres moyens de transport et de travail pendant la circulation et le transport sur route, le groupe chariot (103) restant fixe et ne braquant pas vis-à-vis du bâti de support (105).

2. Système de labourage suivant la revendication 1, **caractérisé en ce qu'**au moins un groupe chariot (103) comprend essentiellement:
- un essieu porteur (5);
- au moins deux roues (1) chacune reliée audit essieu porteur (5) à travers un moyeu respectif (3) chacun articulé sur une glissière (7); lesdites au moins deux glissières (7) étant reliées aux dites au moins deux roues (1) et pouvant coulisser le long de l'axe porteur (5);
- au moins deux éléments de mouvement (11), chacun capable de déplacer une desdites respectives roues (1) dans les positions de transport et de travail; et
- une bride (9) pour le rattachement opérationnel desdits éléments de mouvement (11) audit essieu porteur (5).

3. Système de labourage suivant la revendication 2, **caractérisé en ce que** lesdits éléments de mouvement (11) sont des éléments hydrauliques, constitués notamment par au moins une paire de vérins oléodynamiques (11).

4. Système de labourage suivant une quelconque des revendications précédentes, **caractérisé en ce que** ledit bâti de support (105) est raccordé aux dits moyens de transport et de travail à travers une tête d'accrochage (23).

5. Système de labourage suivant une quelconque des revendications précédentes, **caractérisé en ce que** ledit au moins un groupe chariot (103) est raccordé à un des groupes (2) de fixation des pièces de labourage.

6. Système de labourage suivant une quelconque des revendications précédentes, **caractérisé en ce que** ledit groupe timon (101) comprend essentiellement:
- un corps extérieur (21);
- un corps intérieur (17) logé à l'intérieur du corps extérieur (21) et pouvant en sortir avec un mouvement télescopique en correspondance des positions de transport, d'accrochage/décrochage et de travail de ladite charrue, cette sortie étant réalisée par l'intermédiaire des moyens de commande (19); et
- une boucle d'attelage (15) située à l'extrémité opérationnelle dudit corps intérieur (17).

7. Système de labourage suivant la revendication 6, caractérisé en ce lesdits moyens de commande (19) sont des éléments hydrauliques, constitués en particulier par au moins un vérin oléodinamique.

8. Système de labourage suivant une quelconque des revendications précédentes, **caractérisé en ce qu'**il est également équipé de moyens hydrauliques pour effectuer une rotation dudit groupe timon (101) en position de transport et de travail.

9. Système de labourage suivant une quelconque des revendications précédentes, **caractérisé en ce qu'**il est également équipé de déviateurs de flux à commande mécanique ou électrique pour la commande desdits éléments de mouvement (11) et desdits moyens de commande (19) ainsi que d'autres moyens hydrauliques équipant le système.
